# EUROPEAN PATENT SPECIFICATION

(11) **EP 3 263 405 B1**
(45) Date of publication and mention of the grant of the patent: **07.08.2019**
(21) Application number: 16176408.9
(22) Date of filing: 27.06.2016
(51) Int. Cl.: B60R 1/00

(54) **AROUND VIEW MONITORING SYSTEM AND METHOD FOR VEHICLES**
RUNDUMSICHTÜBERWACHUNGSSYSTEM UND -VERFAHREN FÜR FAHRZEUGE
SYSTÈME DE SURVEILLANCE DE VUE ALENTOUR ET PROCÉDÉ POUR VÉHICULES

(43) Date of publication of application: 03.01.2018
(73) Proprietor: Volvo Car Corporation, 40 531 Göteborg (SE)
(72) Inventor: Lazic, Mr. Nenad, 41263 Göteborg (SE); Stervik, Per, 44250 Ytterby (SE)
(74) Representative: Kransell & Wennborg KB

(56) References cited:
- EP-A1- 2 974 909
- EP-A2- 2 660 104
- WO-A1-2015/114782
- JP-A- 2005 001 570
- JP-A- 2007 090 939
- JP-A- 2007 096 496

## Description

### TECHNICAL FIELD

The present invention relates to a method for positioning a vehicle with respect to a charge station on the ground underneath said vehicle using an around view monitoring system, and a system for positioning a vehicle with respect to a charge station on the ground underneath the vehicle. The method and the system is adapted to provide a driver with an under vehicle view by using e.g. the front, rear or side cameras.

### BACKGROUND

Around view monitoring systems are commonly used to monitor the surroundings of a vehicle. Monitoring the surroundings of vehicles have become more and more important not only from a safety perspective e.g. when parking but also when providing vehicles with added functions. Added functions could be lane detection just as a matter of example. Vehicles are thus provided with cameras positioned at different locations around the vehicle in order to get a full view around the vehicle.

Around view monitoring systems may project the captured images around a bird eye view of the vehicle in order to provide the driver with the sense of viewing the vehicle from above. This has been found to be extra useful when backing or parking.

The US patent application no. US 2016/0101734 A1 disclose an under vehicle image provision apparatus. The apparatus comprises a plurality of bottom view cameras mounted to a bottom of a vehicle. The bottom view cameras provides for under vehicle images from which a driver may view e.g. the tires of the vehicle. The proposed solution has some drawbacks however. Firstly; cameras positioned underneath the vehicle are most likely to be subjected to dirt, rubble and even water spraying from the tires when driving. Not to mention from dirt, rubble or water from other vehicles. There is a high risk that the camera lens will be covered, or even damaged, from being so close to the road. Secondly; the disclosed apparatus requires a several additional cameras in order to get a full view of the underside of the vehicle.

It appears that the present systems are relatively vulnerable and unnecessarily expensive.

Document JP 2007 096496 A relates to a system displaying the status of a road surface below the vehicle and enables a driver to easily judge wheel positions of the vehicle responding to the road status.

Document JP 2007 090939 A relates to relates to a parking support device capable of smoothly parking a vehicle in a parking space without making a tire contact to or collide with a car stop.

EP 3 103 673 discloses a method for positioning a vehicle with respect to a charge station according to the preamble of claim 1, wherein a parking assistance device utilizing a ground mark placed at a parking space indicating coil axis direction and position of a ground coil, and a vehicle mark indicating the coil axis direction and position of a vehicle coil is displayed in an image displayed on a display unit. Then, the vehicle mark is displayed in the image in such a way as to be superimposed on the ground mark when the vehicle on which the vehicle coil is mounted reaches a position and angle at which the vehicle can be wirelessly charged.

### SUMMARY

It is an object of the present disclosure to remove or at least reduce the drawbacks mentioned above, or to provide for a useful alternative. At least one object is at least partly met by a method as defined by claim 1.

The method provides an easy and cheap way to provide for an under vehicle view without actually having under vehicle cameras. The method and system is very useful when positioning a vehicle with respect to an object on the ground underneath the vehicle e.g. when parking. According to the invention, such an object is a charge station. The vehicle can be an automobile, a recreational van, a lorry, a bus, a boat, a trailer for example. The vehicle is preferably a land driven vehicle such as an automobile.

According to an aspect, the method may comprise the step of providing a live stream from at least one camera. The image may advantageously be combined with a live stream from a camera. In this way, the driver is provided with a view that combines an image taken a few moments ago with a live stream from a camera.

The at least one image may be stitched with a live stream feed from the at least one camera. In this manner, a driver driving the vehicle may be provided with a bird eye view for example of the vehicle, its surroundings and an under vehicle view at the same time. This may simplify the driving and positioning of the vehicle when parking.

The method may comprise the step of superposing the at least one image on an image representing the vehicle. This provides for a reference point for the driver and relates the contours of the vehicle with the captured images of the camera. Of course; the images may be adapted to correlate to the image representing the vehicle and/or the image representing the vehicle may be correlated to the other images. The image representing the vehicle is preferably a silhouette, a transparent picture, the contours or the like of the actual vehicle, or at least similar thereto.

The at least one image may be a still image, i.e. a snap shot, or a temporarily stored stream. The specific image type used may vary dependent on the desired functions. Sometimes it may be sufficient to have single still images continuously being updated and sometimes it may be desirable to have a high frame rate. A stream may be defined as having a frame rate of more than 20 frames per second.

The around view monitoring system may comprise one or more cameras, such as at least a front directed camera, a rear directed camera, a first and a second side camera. The first and the second cameras are preferably opposing side cameras i.e. left and right side cameras. One or more images taken by at least two of the cameras may be combined to form the at least one image, e.g. stitched. This is very useful when the vehicle turns and the vehicle drives over a portion of the ground at which two fields of view overlap, i.e. across the ground which may be overlapped by two cameras field of view.

According to the invention at least one image may be visualized as a function of vehicle speed and optionally one more vehicle parameter. When the vehicle moves, the at least one image may be moved on the displayed unit so as to illustrate, or replicate, the vehicle movement. Optionally, if the vehicle turns, the turn should be illustrated or replicated on the display unit by a similar displacement of the image. Other vehicle parameter may be travelled distance and/or steering angle for example. The travelled distance may be measured by the vehicle e.g. via wheel ticks, i.e. the number of laps the wheels has turned, or via GPS positioning, or other positioning units and methods. By this a driver can get a very good bird eye view when driving.

The vehicle defines a vehicle periphery on the ground when viewed from above. The at least one image is preferably taken on the ground outside of the vehicle periphery. The around view monitoring system does not need under vehicle cameras to form an under vehicle view. Instead, the driver just has to drive across the ground which has been imaged in order to display the image as an under vehicle view.

The at least one image is advantageously stitched with a live stream so as to form a stich seam following the vehicle periphery. By this a driver will get a very good driving assistance from the display unit.

The at least one image is visualized as a 3D image. The vehicle may be visualized from above to form a bird eye view, but the vehicle may optionally or additionally be visualized from the side. When visualized from the side, it may be advantageous if objects on the ground such as a charge station or a stone are visualized as 3D objects. The 3D image of objects may be created using 3D cameras, or two separate cameras imaging from two different positions.

The at least one image may be provided with a selected number of frames per second, the selected number of frames per second being set as a function of the vehicle speed. At a fast speed, the image may be provided at a high rate per second for example. The faster the vehicle travels, the more frames per second may be desirable.

It is also within the boundaries of the present disclosure to provide an around view monitoring system for a vehicle. The around view monitoring system comprises at least one camera, a processing unit and a display unit. The processing unit is adapted to track a ground area with respect to the vehicle based on the ground the at least one image is imaging and to visualize the at least one image as an under vehicle view if the vehicle is moved over at least a portion of the ground area.

The system provides a cheap system which does not require under vehicle cameras. Under vehicle cameras are often exposed to dirt, rubble, water and snow, especially from splashes from the tires. The present system removes the need for cameras positioned underneath the vehicle, or even at the underside of the vehicle, to provide the under vehicle view for a driver.

### BRIEF DESCRIPTION OF THE DRAWINGS

Non-limiting embodiments of the present invention will be disclosed in greater detail with reference to the accompanying drawings in which;
figure 1 shows a vehicle having an around view monitoring system and with a view towards the side;
figure 2 shows the vehicle of figure 1 from above;
figure 3 shows the vehicle of figure 2 with the cameras field of view illustrated;
figure 4 shows a schematic block diagram of an around view monitoring system for a vehicle;
figure 5a shows a vehicle with the cameras field of view illustrated, figure 5a also illustrates an optional displayed view as displayed on a displaying unit;
figure 5b shows the vehicle of figure 5a with the front camera field of view illustrated,

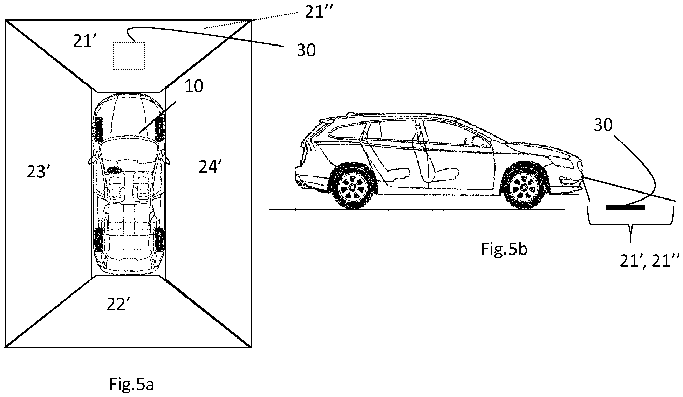

figure 5b also illustrates an optional displayed view as displayed on a displaying unit;

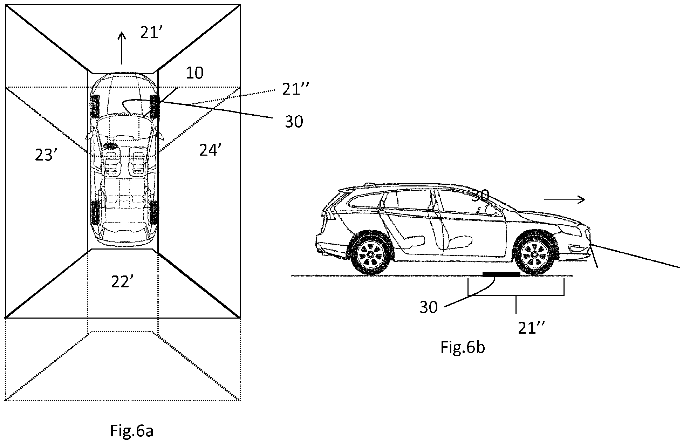

figure 6a shows the vehicle of figure 5a after the vehicle has been moved;
figure 6b shows the vehicle of figure 5b after the vehicle has been moved;

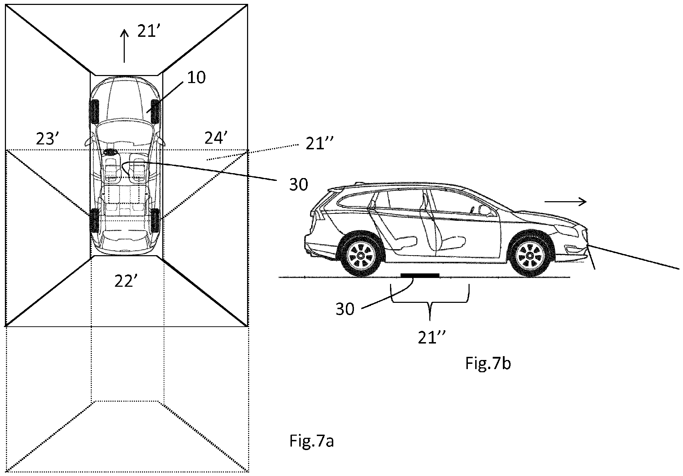

figure 7a shows the vehicle of figure 6a after the vehicle has been moved even further;
figure 7b shows the vehicle of figure 6b after the vehicle has been moved even further and;

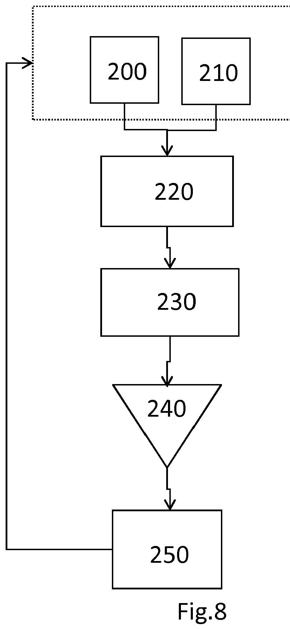

figure 8 shows a schematic block diagram over an embodiment of a method for illustrating the ground underneath a vehicle.

### DETAILED DESCRIPTION OF PREFERRED EMBODIMENTS

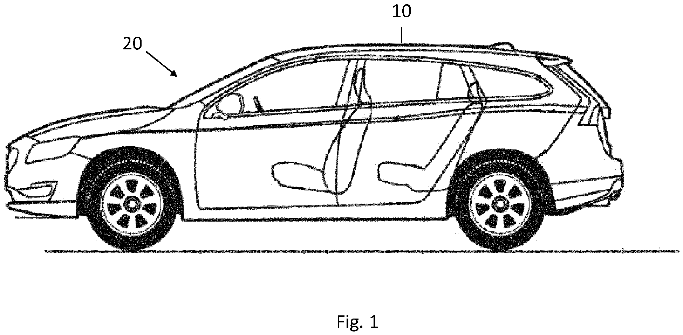

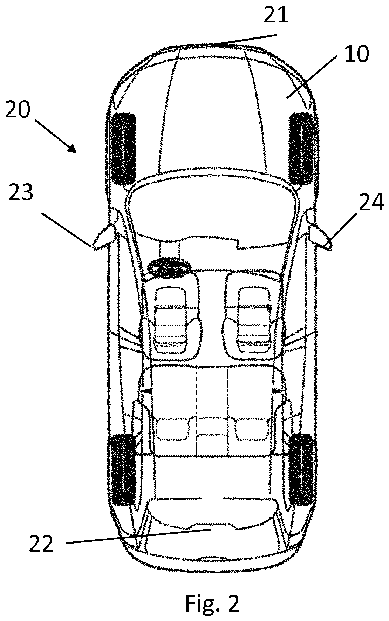

Figure 1 shows a vehicle 10 in the form of an automobile with a view towards the side. The vehicle 10 comprises an around view monitoring system 20 having a plurality of cameras. Using the around view monitoring system, a driver may get a birds eye view for example, assisting the driver when e.g. parking. Figure 2 shows the vehicle 10 with a view from above. The around view monitoring system 20 has in the shown embodiment four cameras; a front camera 21, a rear camera 22 and a first and a second side camera 23, 24 also referred to as a left and a right camera 23, 24. It should be noted that the around view monitoring system 20 may be provided with one or more cameras and that the illustrated embodiment is shown with four cameras only for the purpose of simplicity. The around view monitoring system 20 may be provided with 1, 2, 3, 4, 5, 6, 7, 8, 9 or more cameras just as a matter of example. By use of the one or more cameras, it is possible to take an image and process that image e.g. by superposing the image on an image representing the vehicle. It is further possible to displaceably visualize the image as a function of the vehicle speed and/or one or more additional vehicle parameters. The position of the ground which has been imaged is tracked with respect to the vehicle. This will provide a virtual under vehicle image of the vehicle with a delayed time perspective giving the appearance of a vehicle driving across the ground. The image may further move synchronously with the vehicle to enhance the appearance of the vehicle driving over the ground.

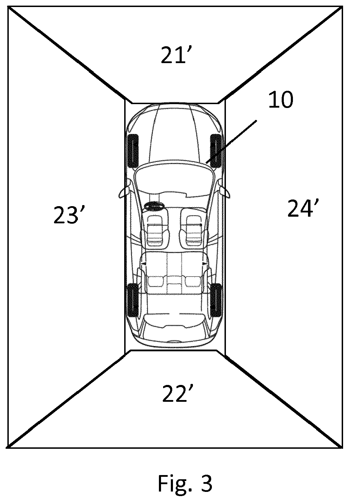

Figure 3 shows the vehicle 10 with the front, rear, left and right cameras 21, 22, 23, 24 field of view illustrated 21', 22', 23', 24'. The field of view further illustrates an around view image. When displayed to the driver in the vehicle 10 the around view image is usually illustrated with a top view of the vehicle 10 as shown in figure 3. The around view image may be live streamed to the display unit (not shown). As can be noticed, the field of view substantially follows the contours of the vehicle so that when displayed on the displaying unit, the live streamed film is correlated to the vehicle contours.

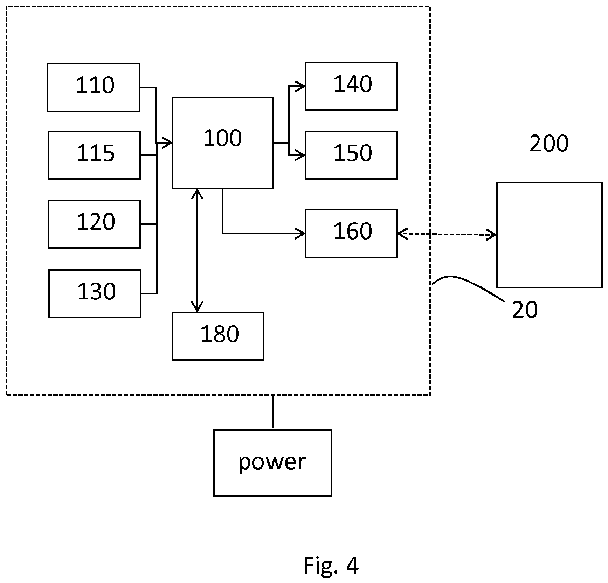

Figure 4 schematically illustrates an embodiment of the around view monitoring system 20. The around view monitoring system 20 comprises a processing unit 100 which governs and process data from the cooperating units, one or more cameras 110, one or more illumination units 115, other vehicle sensors 120, and a navigation unit 130. The around view monitoring system 20 further comprises a display unit 140, a data input unit 150, a communication unit 160, and a memory unit 180. A power supply such as the vehicle battery supplies power to the around view monitoring system. A server system 200 is available or updates or data processing and storage.

The processing unit 100 may be an on-board vehicle computer, CPU, or the like.
The one or more cameras 110 may be wide angle cameras, such as super wide angle camera, having an angle of view of 180 degrees or larger. The one or more cameras may of course be provided with light sensors. The one or more cameras may be provided with additional data collecting units such as radar, LIDAR, image recognition system, object detection unit, object identification unit, object tracking unit, or the like. The one or more illuminations units may be, light emitting diodes, such as infrared light-emitting diodes, to provide illumination to said cameras in low light conditions.

The vehicle sensors 120 may be any vehicle sensor such as strain gauges, speedometers, oil gauges, fuel gauges, steering angle sensors, dampening sensors, seat sensors, door sensors, light sensors, position and navigation sensor, accelerometers, heading sensor, yaw, sensor, gyro sensor, wheel sensor, vehicle body tilt sensor, battery sensor, tire sensor, inside and/or outside temperature sensor, interior humidity sensor, throttle sensor, crank sensor, water temperature sensor, air intake sensor, or the like.

The navigation unit 130 may be one or more GPS units, or enhanced GPS units, wi-fi positioning units, landmark navigational units or the like and combinations thereof.

The display unit 140 may be a fixed display unit of the vehicle such as a HUD, a LCD screen, or a mobile display unit such as mobile device, mobile phone, think pad, ipad or the like. It may be a touch screen or operated via buttons, voice commands, gesture recognition systems or the like. A data input unit 150 enable user to manipulate, change settings and/or operate the around view monitoring system 20. As can be understood, the display unit and the operating unit may be formed by the same device e.g. via a touch screen operated device.

The communication unit 160 may be adapted to communicate with a wireless network such as 3G, 4G, 5G telecom networks, wifi, bluetooth just to mentioned a few.

The memory unit may is a data storage device and may storage data captured by the cameras or other units. Camara data may be stored as in an mpeg format such as mpeg 1, 2, 3, or 4, AVI, M4V, 3GPP, 3GPP2, Nullsoft streaming video, jpeg or gif format just to mention a few data formats.

The server system 200 may be a cloud based administrated server, adapted to store or forward data. The data may be software updates, data processing or the like.

With reference to figures 5a-7b, non-limiting embodiments of the method for illustrating the ground underneath a vehicle will be described in greater detail. Figures 5a, 6a, and 7a show the vehicle 10 with a view from above while figures 5b, 6b, and 7b show the vehicle 10 with a view towards the side. The figures 5a,6a and 7a, illustrates the vehicle 10 moving and thus show the vehicle 10 at different times and in a chronological order. In a similar manner, figures 5b, 6b and 7b illustrates the vehicle 10 moving and thus show the vehicle 10 at different times and in a chronological order.

Figure 5a shows the vehicle 10 and the field of view 21', 22', 23', 24', provided by the cameras. Just as a matter of example, the method will be described by using the front field of view 21' and by illustrating the vehicle 10 driving straight ahead. For the purpose of describing the method, the display unit illustrates the vehicle 10 from above, in a similar manner as shown in figure 5a with live streams from the cameras 21, 22, 23, 24 showing the ground in respective field of view 21', 22', 23', 24' on the display unit. Figure 5b shows the front field of view 21' from the side. As can be noticed the cameras of the around view monitoring system does not directly image the ground underneath the vehicle 10. Instead, the front camera (not shown) continuously take images of the area in front of the vehicle 10, as is illustrated with the bracket representing the field of view 21' as seen from the side while at the same time live streaming the area, i.e. the field of view 21' to the display unit. The one or more images are stored, temporarily or permanently. The storage of the images may be locally or remotely on a server.

The other cameras, i.e. the rear camera 22, and the two side cameras 23, 24 may also take images if desirable. It should be noted that if the same camera is used to take one or more image also is live streaming, the one or more images may be retrieved from a temporarily stored live stream. The image does not necessarily need to be taken separately from a live stream. Hence it is possible to store the live streams, to retrieve an image therefrom of the ground which the vehicle drives over. The around view monitoring system 20 may temporarily store images of the surrounding environment from preferably all of the field of views 21', 22', 23', 24'. To illustrate an object on the ground, a charge station 30 for an electrically powered vehicle is illustrated in figure 5a.

Figure 6a-6b shows the vehicle 10 after travelling straight forward a limited distance. As can be seen the front camera 21 imaging an area represented by the field of view 21', is still imaging in front the vehicle 10 to live stream that ground area to the driver. The image taken earlier by the front camera of the front field of view 21', is imaging a ground area. The imaged ground area is referred to as ground area 21". The ground area 21" is fixed with respect to the vehicle 10 position at a specific time. As can be gleaned, as the vehicle 10 travels forward, the vehicle 10 travels over ground area 21". The image taken on the ground area 21" effectively becomes an under vehicle image to the vehicle 10. A driver viewing the display unit, displaying the vehicle 10 as shown in figures 5a, 6a, 7a for example, will thus perceive the taken image on the ground area 21" as the ground under the vehicle 10, at the time when passing the ground area 21". The actual image was however taken earlier and before passing over the ground area 21". Hence no under vehicle cameras are necessary. As can further be seen, the charge station 30 is displayed as being underneath the vehicle 10 although slightly displaced a distance corresponding to the vehicle displacement.

Figures 7a-7b shows in a similar manner the vehicle 10 after travelling yet another distance. The first ground area 21" is even further displaced with respect to the vehicle 10 and thus visualizes how the vehicle 10 travels across the ground. The image is thus also visualized displaced in correspondence with how the vehicle 10 is moved, i.e. driven by the driver. As can further be seen, the charge station 30 is displayed as being underneath the vehicle 10 slightly further displaced a distance corresponding to the vehicle displacement. By the assistance of the method a driver may easily position the vehicle 10 with respect to e.g. the charge station 30 even though the vehicle does not have the ability to image directly underneath the vehicle.

The position of the ground which has been imaged is thus tracked so that the image may be visualized as an under vehicle view when a driver drives the vehicle over the specific ground. The tracking may be made purely by calculations or by position measurements, combinations thereof are of course possible.

The method may further comprise the step of incorporating the image in a live stream. The image may thus be stitched with the live stream taken by the cameras of the surrounding view, giving the driver a bird eye view of the vehicle 10 including an under vehicle view when moving over the specific ground area. In general, the method may thus comprise the step of stitching an image taken at a first time with a second image taken at a second time, and displaying those images at the same time on the display unit. The second image is preferably a live stream. The method may thus comprise to take a still image and stitch that image with a live stream from a camera. The time difference between the first and the second time is dependent on the vehicle speed.

As an option; a camera, e.g. the front camera, continuously captures an image of e.g. the front field of view 21' and live stream that image to the display unit. As the vehicle 10 moves, as illustrated in figures 5a-7b, the captured images may be temporarily stored and displayed slightly delayed to display the ground underneath the vehicle as the vehicle travels across the ground area 21". The time delay is dependent on the vehicle speed.

The surrounding view and the under vehicle view may be superposed onto a contour, silhouette, or other image representing the vehicle. The vehicle is preferably transparent in order to give the driver a proper view of the ground underneath the vehicle, i.e. the under vehicle view.

According to the invention the method may be applied in order to display an object on the ground underneath the vehicle being a charge station. Just as a matter of example, a charge station 30 is illustrated in figures 5a-7b. The method may thus be used when positioning the vehicle with respect to an object on the ground, as an image of the ground, in front, rear, or at the sides of the vehicle may be imaged, and subsequently displayed as an under vehicle view of the vehicle when the vehicle passes the ground which has been imaged. In accordance with the method, the image of an object may be displayed, or if the object is recognized using an object recognition unit, only the object may be displayed. This is especially useful as the vehicle may be visualized on the displaying unit from the side, with the measured or estimated height of object visualized, as shown in figures 5b, 6b, and 7b for example.

The image, whether it is a still image or a temporarily stored stream of images, i.e. a film, is displaced as a function of the vehicle speed. The image may thus be visualized as moving in correlation with how the vehicle moves. In the disclosure above, this was illustrated by moving the vehicle straight ahead. The steering angle is set to 0° and the speed of the vehicle determines the speed at which the image is displaced when displayed on the display unit. As can be gleaned, the same method may be applied independently of how the vehicle moves. The vehicle may of course be turned when moving forward or rearward. Independently of how the vehicle moves, the around view monitoring system can image the surroundings and use the images and display the images or objects on the ground as an under vehicle view, i.e. as an image of the ground underneath the vehicle, when driving over the imaged ground. This will provide a full bird eye view of the vehicle and what is underneath the vehicle especially if stitched, or in any other way correlated with the live stream provided by the around view monitoring system.

As mentioned, the position of the ground is tracked with respect to the vehicle. The position of the ground which has been imaged may thus be related to the specific image taken on the ground. This can be done by pinpointing the image with a geographical position for example. If a still image is used, each still image, or set of still images, is given a geographical position e.g. set by a GPS unit, preferably an enhanced GPS unit. Optionally, the position of the ground which has been imaged may be related to the vehicle position via the vehicle speed, travelled distance, and as a function of the steering angle and turning radius. Hence, in general the GPS position and/or a calculated position may be used to relate the ground, and thus the image position, of the image with the position of the vehicle. Combinations of both steps are of course possible.

Stored images may be deleted after a predetermined time and/or after the vehicle has driven a pre-set distance. A suitable predetermined time is 5 minutes or less. This will prevent the usage of too old images of the ground, as new objects may have been placed on the ground, or been removed therefrom.

Figure 8 shows a block diagram of illustrating a non-limiting embodiment of the present invention. At step 200, live streams are created using the available cameras in the around view monitoring system. The live stream is visualized on the display unit.

At step 210 One or more cameras of the around view monitoring system is used to create images, i.e. snap shots, of the vehicle surroundings. The cameras are imaging in front of the vehicle, behind the vehicle and on the sides of the vehicle. It should be noted that other cameras may be used than those specifically used for the live streaming.

At step 220 the vehicle moves and the available sensors forward e.g. the vehicle speed, travelled distance and steering angle to the processing unit. Other sensors may optionally or additionally be used to correlate the position of the vehicle with respect to the image such as GPS positions.

At step 230 the relative position of the ground which has been imaged by the image and the vehicle is correlated. If the vehicle moves, the image is moved respectively or portrayed as moving with the vehicle. The correlation may be performed by calculating or by measuring the relative positions of the ground which is the subject of the image and the vehicle. If the vehicle speed is zero, the image is still, i.e. not moving. This gives the driver a view of what is underneath the vehicle although the image was taken on the ground when the vehicle was at the side of the imaged ground.

At 240 the image is stitched into the live stream to provide a camera view of what is beneath the vehicle if the vehicle is moved over the ground imaged by the said image.

At 250 the stitched camera view is displayed on the display unit and preferably superposed an image representing the vehicle so at to give the driver a good bird eye view of the vehicle, the surroundings and the ground underneath the vehicle.

The image stitching may be performed in different ways. Generally an algorithm is used to relate pixel coordinates in one image with pixel coordinates in a second image to align the images. Various pairs, or groups, of images are further aligned. Features in the images such as stones, lane markings etc. on the road, are matched to reduce the time to find correspondence between images. Methods such as image registration and/or key point detection may be used. The images may further be calibrated to harmonize the images. Defects due to exposure differences between images, camera response and chromatic aberrations, vignetting, and distortions may be reduced or removed. Image blending may thereafter be performed. When blending, the calibration step is implemented and usually involves rearranging the images to form an output projection. The purpose is to provide images with no seams, or to minimize the seams between the images. Colors maybe adjusted in the images.

It should be noted that the method disclosed herein, and the arrangement, may be used in combination with cameras positioned underneath vehicle specifically arranged to film underneath the vehicle, for example as a back-up system or verification system.

## Claims

1. A method for positioning a vehicle (10) with respect to a charge station (30) on the ground underneath said vehicle (10) using an around view monitoring system (20), said around view monitoring system (20) comprising at least one camera (21, 22, 23, 24), a processing unit (100) and a display unit (140),
wherein said method comprising;
- taking at least one image on the ground (21", 22", 23", 24") with said charge station (30) using at least one camera (21, 22, 23, 24);
- tracking the position of said ground with said charge station (30) with respect to said vehicle (10), **characterised by**;
- visualizing said ground with said charge station (30) as an under vehicle view and as a function of the vehicle speed, if said vehicle (10) is moved over at least a portion of said ground (21", 22", 23", 24") with said charge station (30).

2. The method according to claim 1, whereby said method comprises the step of providing a live stream from at least one camera (21, 22, 23, 24).

3. The method according to claim 2, whereby said at least one image is stitched with a live stream feed from said at least one camera (21, 22, 23, 24).

4. The method according to any one of the preceding claims, whereby said method comprises the step of; superposing said at least one image on an image representing said vehicle.

5. The method according to any one of the preceding claims, whereby said at least one image is a still image or a temporarily stored stream.

6. The method according to any one of the preceding claims, whereby said around view monitoring system (20) comprises at least a front directed camera (21), a rear directed camera (22), a first and a second side camera (23, 24), preferably said one or more images are taken by at least two of said cameras (21, 22, 23, 24) are optionally stitched to form said at least one image.

7. The method according to any one of the preceding claims, whereby said at least one image is visualized as a function of at least one more vehicle parameter.

8. The method according to claim 7, whereby said additional vehicle parameter is steering angle and/or travelled distance.

9. The method according to any one of the preceding claims, whereby said vehicle (10) defines a vehicle periphery on the ground when viewed from above, and in that said at least one image is taken on the ground outside of said vehicle periphery.

10. The method according to claim 9, whereby said at least one image is stitched with a live stream so as to form a stitch seam following said vehicle periphery.

11. The method according to any one of the preceding claims, whereby said at least one image is visualized as a 3D image.

12. The method according to claim 11, whereby said method comprises the step of; visualizing a side view said at least one image on an image representing said vehicle.

13. The method according to claim 11 or 12, whereby said method comprises visualizing said vehicle (10) from the side, with the measured or estimated height of said charge station (30) visualized.

14. The method according to any one of the preceding claims, whereby said at least one image is provided with a selected number of frames per second, said selected number of frames per second being set as a function of said vehicle speed.

15. A system for positioning a vehicle (10) with respect to a charge station (30) on the ground underneath said vehicle (10), said system comprising an around view monitoring system for a vehicle (10), said around view monitoring system (20) comprising at least one camera (21, 22, 23, 24), a processing unit (100) and a display unit (140),
wherein said processing unit (100) is adapted to track a ground area (21", 22", 23", 24") with said charge station (30) with respect to said vehicle (10) based on the ground said at least one image is imaging **characterised in that** said processing unit (100) is adapted to visualize said at least one image as an under vehicle view if said vehicle (10) is moved over at least a portion of said ground area (21", 22", 23", 24") with said charge station (30).

## Patentansprüche

1. Verfahren zum Positionieren eines Fahrzeugs (10) in Bezug auf eine Ladestation (30) auf dem Boden unterhalb des Fahrzeugs (10) unter Verwendung eines Rundsichtüberwachungssystems (20), wobei das Rundsichtüberwachungssystem (20) mindestens eine Kamera (21, 22, 23, 24), eine Verarbeitungseinheit (100) und eine Anzeigeeinheit (140) umfasst,
wobei das Verfahren Folgendes umfasst:
- Aufnehmen mindestens eines Bildes auf dem Boden (21", 22", 23", 24") mit der Ladestation (30) unter Verwendung der mindestens einen Kamera (21, 22, 23, 24);
- Verfolgen der Position des Bodens mit der Ladestation (30) in Bezug auf das Fahrzeug (10), **gekennzeichnet durch**:
- Visualisieren des Bodens mit der Ladestation (30) als eine Sicht unter dem Fahrzeug und als eine Funktion der Fahrzeuggeschwindigkeit, wenn das Fahrzeug (10) zumindest über einen Teil des Bodens (21", 22", 23", 24") mit der Ladestation (30) bewegt wird.

2. Verfahren nach Anspruch 1, wobei das Verfahren den Schritt umfasst, eine Echtzeitübertragung von mindestens einer Kamera (21, 22, 23, 34) zu liefern

3. Verfahren nach Anspruch 2, wobei das mindestens eine Bild mit einer Echtzeitübertragung, die von der mindestens einen Kamera (21, 22, 23, 24) eingespeist wird, zusammengeheftet ist.

4. Verfahren nach einem der vorhergehenden Ansprüche, wobei das Verfahren den folgenden Schritt umfasst: Überlagern des mindestens einen Bildes mit einem Bild, das das Fahrzeug repräsentiert.

5. Verfahren nach einem der vorhergehenden Ansprüche, wobei das mindestens eine Bild ein Standbild oder ein vorübergehend gespeicherter Datenstrom ist.

6. Verfahren nach einem der vorhergehenden Ansprüche, wobei das Rundsichtüberwachungssystem (20) mindestens eine nach vorne gerichtete Kamera (21), eine nach hinten gerichtete Kamera (22) sowie eine erste und eine zweite Seitenkamera (23, 24) umfasst, wobei vorzugsweise das eine oder die mehreren Bilder, die durch mindestens zwei der Kameras (21, 22, 23, 24) aufgenommen werden, wahlweise zusammengeheftet sind, um das mindestens eine Bild zu erzeugen.

7. Verfahren nach einem der vorhergehenden Ansprüche, wobei das mindestens eine Bild als eine Funktion mindestens eines weiteren Fahrzeugparameters visualisiert wird.

8. Verfahren nach Anspruch 7, wobei der zusätzliche Fahrzeugparameter ein Lenkwinkel und/oder eine zurückgelegte Strecke ist.

9. Verfahren nach einem der vorhergehenden Ansprüche, wobei das Fahrzeug (10) einen Fahrzeugumfang auf dem Boden definiert, wenn es von oben betrachtet wird, und wobei das mindestens eine Bild auf dem Boden außerhalb des Fahrzugumfangs aufgenommen wird.

10. Verfahren nach Anspruch 9, wobei das mindestens eine Bild mit einer Echtzeitübertragung zusammengeheftet ist, um einen Heftdatenstrom zu erzeugen, der dem Fahrzeugumfang folgt.

11. Verfahren nach einem der vorhergehenden Ansprüche, wobei das mindestens eine Bild als ein 3D-Bild visualisiert wird.

12. Verfahren nach Anspruch 11, wobei das Verfahren den folgenden Schritt umfasst: Visualisieren einer Seitensicht des mindestens einen Bildes auf einem Bild, das das Fahrzeug repräsentiert.

13. Verfahren nach Anspruch 11 oder 12, wobei das Verfahren umfasst, das Fahrzeug (10) von der Seite zu visualisieren, wobei die gemessene oder geschätzte Höhe der Ladestation (30) visualisiert wird.

14. Verfahren nach einem der vorhergehenden Ansprüche, wobei das mindestens eine Bild mit einer ausgewählten Anzahl von Teilbildern pro Sekunde geliefert wird, wobei die ausgewählte Anzahl von Rahmen pro Sekunde als eine Funktion der Fahrzeuggeschwindigkeit eingestellt ist.

15. System zum Positionieren eines Fahrzeugs (10) in Bezug auf eine Ladestation (30) auf dem Boden unterhalb des Fahrzeugs (10), wobei das System ein Rundsichtüberwachungssystem für ein Fahrzeug (10) umfasst, wobei das Rundsichtüberwachungssystem (20) mindestens eine Kamera (21, 22, 23, 24), eine Verarbeitungseinheit (100) und eine Anzeigeeinheit (140) umfasst,
wobei die Verarbeitungseinheit (100) ausgelegt ist, einen Bodenbereich (21", 22", 23", 24") mit der Ladestation (30) in Bezug auf das Fahrzeug (10) anhand des Bodens, den das mindestens eine Bild abbildet, zu verfolgen,
**dadurch gekennzeichnet, dass** die Verarbeitungseinheit (100) ausgelegt ist, das mindestens eine Bild als eine Sicht unter dem Fahrzeug zu visualisieren, wenn das Fahrzeug (10) zumindest über einen Teil des Bodenbereichs (21", 22", 23", 24") mit der Ladestation (30) bewegt wird.

## Revendications

1. Procédé de positionnement d'un véhicule (10) par rapport à une station (30) de charge sur le sol sous ledit véhicule (10) à l'aide d'un système (20) de surveillance de vue alentour, ledit système (20) de surveillance de vue alentour comportant au moins une caméra (21, 22, 23, 24), une unité (100) de traitement et une unité (140) d'affichage, ledit procédé comportant les étapes consistant à :
- prendre au moins une image sur le sol (21", 22", 23", 24") comportant ladite station (30) de charge à l'aide d'au moins une caméra (21, 22, 23, 24) ;
- suivre la position dudit sol comportant ladite station (30) de charge par rapport audit véhicule (10), **caractérisé par** :
- visualiser ledit sol comportant ladite station (30) de charge comme une vue sous le véhicule et en fonction de la vitesse du véhicule, si ledit véhicule (10) est déplacé au-dessus d'au moins une partie dudit sol (21", 22", 23", 24") comportant ladite station (30) de charge.

2. Procédé selon la revendication 1, ledit procédé comportant l'étape consistant à fournir un flux en direct en provenance d'au moins une caméra (21, 22, 23, 24) .

3. Procédé selon la revendication 2, ladite ou lesdites images étant raccordée avec une arrivée de flux en direct en provenance de ladite ou desdites caméras (21, 22, 23, 24).

4. Procédé selon l'une quelconque des revendications précédentes, ledit procédé comportant l'étape consistant à : superposer ladite ou lesdites images à une image représentant ledit véhicule.

5. Procédé selon l'une quelconque des revendications précédentes, ladite ou lesdites images étant une image fixe ou un flux stocké temporairement.

6. Procédé selon l'une quelconque des revendications précédentes, ledit système (20) de surveillance de vue alentour comportant au moins une caméra (21) dirigée vers l'avant, une caméra (22) dirigée vers l'arrière, une première et une deuxième caméra latérale (23, 24), ladite ou lesdites images étant de préférence prises par au moins deux desdites caméras (21, 22, 23, 24) et étant éventuellement raccordées pour former ladite ou lesdites images.

7. Procédé selon l'une quelconque des revendications précédentes, ladite ou lesdites images étant visualisées en fonction d'au moins un paramètre supplémentaire de véhicule.

8. Procédé selon la revendication 7, ledit paramètre supplémentaire de véhicule étant l'angle de direction et/ou la distance parcourue.

9. Procédé selon l'une quelconque des revendications précédentes, ledit véhicule (10) définissant une périphérie de véhicule sur le sol lorsqu'il est vu de dessus, et ladite ou lesdites images étant prises sur le sol à l'extérieur de ladite périphérie de véhicule.

10. Procédé selon la revendication 9, ladite ou lesdites images étant raccordées avec un flux en direct de façon à former une jointure de raccordement suivant ladite périphérie de véhicule.

11. Procédé selon l'une quelconque des revendications précédentes, ladite ou lesdites images étant visualisées sus la forme d'une image 3D.

12. Procédé selon la revendication 11, ledit procédé comportant l'étape consistant à : visualiser en vue latérale ladite ou lesdites images sur une image représentant ledit véhicule.

13. Procédé selon la revendication 11 ou 12, ledit procédé comportant la visualisation dudit véhicule (10) depuis le côté, la hauteur mesurée ou estimée de ladite station (30) de charge étant visualisée.

14. Procédé selon l'une quelconque des revendications précédentes, ladite ou lesdites images étant fournies avec un nombre choisi de trames par seconde, ledit nombre choisi de trames par seconde étant réglé en fonction de la vitesse dudit véhicule.

15. Système de positionnement d'un véhicule (10) par rapport à une station (30) de charge sur le sol sous ledit véhicule (10), ledit système comportant un système de surveillance de vue alentour pour véhicule (10), ledit système (20) de surveillance de vue alentour comportant au moins une caméra (21, 22, 23, 24), une unité (100) de traitement et une unité (140) d'affichage, ladite unité (100) de traitement étant prévue pour suivre une zone (21", 22", 23", 24") de sol comportant ladite station (30) de charge par rapport audit véhicule (10) d'après le sol dont ladite ou lesdites images capturent l'image, **caractérisé en ce que** ladite unité (100) de traitement est prévue pour visualiser ladite ou lesdites images comme une vue sous le véhicule si ledit véhicule (10) est déplacé au-dessus d'au moins une partie de ladite zone (21", 22", 23", 24") de sol comportant ladite station (30) de charge.
